# EUROPEAN PATENT SPECIFICATION

(11) **EP 1 235 161 B1**
(45) Date of publication and mention of the grant of the patent: **29.05.2013**
(21) Application number: 02004442.6
(22) Date of filing: 26.02.2002
(51) Int. Cl.: G06F 17/30, G06F 17/21

(54) **Electronic document management system**
Elektronisches Dokumentenverwaltungssystem
Système électronique de gestion de documents

(30) Priority: 26.02.2001 US 794201
(43) Date of publication of application: 28.08.2002
(73) Proprietor: Xerox Corporation, Rochester, New York 14644 (US)
(72) Inventor: Sans, Charles, Rolling Hills Estates, California 90247 (US); Bouche, Jean-Yves, 01630 Sergy (FR); VanSickel, Allen, Crritos, California 90703 (US)
(74) Representative: Grünecker, Kinkeldey, Stockmair & Schwanhäusser

(56) References cited:
- EP-A- 1 087 306
- WO-A-02/10970
- US-A- 5 181 162

## Description

This invention relates generally to electronic document management systems and more particularly, to a system and method which enables the creation, modification, production and distribution of documents for the lifetime of the documents.

Electronic document systems enable the creation, modification and storage of various document components, such as text, graphics and multimedia, into a single "document." Outputting of an electronic document into a printed document or for display on an output media requires converting the individual document components into a format that can be used by the printer or output device. Generally this takes the form of an output data stream. Once the electronic document has been converted into an output data stream, it can be saved and transmitted for reprinting or redisplay on the same or a similar output device. However, the output data stream cannot be modified for outputting on a different output device or modified to incorporate any changes desired.

Electronic document systems have made the production of complex color print jobs easier. In the current era where "one to one", " personalized" and "customized" documents are a key component of companies strategy to increase communication with their customers, the creation, production and distribution of documents is more than ever a collaborative effort. Considerable effort goes into taking a full color magazine, for example, from original ideas to design to layout with text, photos, graphics, etc. to an output data stream. For example, the design for a travel-advertising flyer may be decided by the marketing department and passed to the graphics specialist who will create the pictures and graphical elements of the document. Then the layout specialist uses applications such as Quark Xpress or VIPP IDE to create the electronic layout and merge rules for all the document components. Production and distribution of the document are next steps.

One of the key problems when trying to obtain production speeds while printing variable data on full color printers is the amount of data that needs to be processed very quickly. One solution, called Dynamic Document Composition (DDC), separates the job components that are re-used across jobs (for example, forms, logos, images, etc.) and the unique variable data that is used only for a run. The reusable components can then be stored as separate files and merged with the variable data on the printer.

While DDC increases printer output, as print jobs become more complex, moving a job from the design workstation to the production location requires "collecting" and transferring all the separate files. If one file is missing, the job will not print. Another frequent problem is that often, the reusable components are in the final printer-required output format (for example, PostScript^{™}, TIFF, JPEG, etc.) and cannot be edited. Thus, if a last minute modification needs to be done when all the components have already been transferred, they cannot be modified on the fly, thus limiting the portability of jobs across printers.

Since most production printing jobs containing variable data are handled by large data processing centers, the problem of missing components or modifying components is handled by human intervention. A human operator would typically find the missing file or regenerate it and locate the design files needed to modify an existing output data stream file. However, with the introduction of lower cost, fast full color printers many small graphic arts shops have begun to handle variable data printing jobs. These smaller shops do not have the personnel who are qualified to manipulate files. Since DDC is often used to improve performance, if a file is missing or needs to be modified, the production print job cannot be completed.

US 5,181,162 describes a document management and production system, wherein documents are represented as collections of logical components or "objects", that may be combined and physically mapped onto a page-by-page layout.

The object of the invention is to provide an electronic document management system that simplifies the handling of job components of a job associated with an electronic document.

This object is solved by the subject matter of the independent claims. Preferred embodiments are subject matter of the dependent claims.

An electronic document management system, according to the invention, manages all of the components and activities associated with outputting an output version of an electronic document during the lifetime of the document. The system of the invention simplifies the handling of job components by logically and physically grouping these components as part of a single entity called a project. The system of the invention is particularly useful for managing production print jobs by printers, but is applicable to any output device. A project includes at least one job associated with an electronic document. A job includes the activities associated with generation of a data stream for use by an output device for outputting an output version of the electronic document. The system integrates components in any format and can be applied to any output device or be used to generate any type of data stream. In the case of a printer, the output version is a printed document. In the case of a video display, the output is streaming video. A project file is associated with the job and includes a list of all components associated with the job and for each such component, the component's attribute information and location information. The project file may be encoded using an extensible markup language such as XML or SGM. The system also stores all components needed for the job.

The system of the invention employs a hierarchical file structure for ordering the components. The project may include a plurality of components having a local scope, where local scope means the component may be used by any job in the project. A second level includes a folder structure. The project may reside within a folder. The folder may also include a plurality of components having a folder scope, where folder scope means the component may be used by any job in the folder. The system may also include other components having a global scope, where global scope means the component may be used by any job in the system.

The system of the invention uses a two level hierarchical structure: the project level and the folder level. A project can be described as a collection of components that are used at one or several steps of a job lifecycle. Examples of project components, in the case of a production print job, include JDTs, DMBs, forms, segments, pictures, fonts, production data, pre-processed objects in optimized formats for use of a specific digital front end (DFE) or application, an editable version of the job in application specific format (e.g., DesignMerge), a viewable version of the job in final format (e.g., PDF, TIFF, etc.) A folder can be described as a collection of projects that share some commonality. For example, a Service Bureau may create a folder for each customer and then store the jobs from each customer as projects in the customer's folder.

In the system of the invention, components have a local, folder or global scope. This allows sharing components across projects and folders without having to duplicate them. Components with a local scope can only be used by the project to which they pertain. Local scope takes precedence over folder shared scope and global shared scope. If a component in the local scope is also available with the same name in the folder shared or global shared scope, then the one with the local scope will be used. Folder shared scope means components are shared between all the projects in a specific folder. For example, a department logo may be shared across all the projects of the department. This not only saves storage space, but also insures consistency across jobs and simplifies maintenance. Folder shared scope takes precedence over global shared scope. Global shared scope means the DFE or application shares the components among all projects in all accessible folders. For example, a company logo or a copyright statement may be shared across all the projects of the company. Assigning a global shared scope to both of these components avoids having to store them on every project or folder.

In order for the output device or application to handle projects, a physical representation of the project must exist. While many methods may be used to physically represent a project, three exemplary methods are described. These include organizing the project components (or files) in specific directories and storing components and project information on a project file; organizing the project components (files) in specific directories; and organizing the project components (files) including the project file into a single "container." If the output device has access to the system, the components may be accessed by knowing their storage location or by accessing the project file. For portability, project components can be compressed and stored in a single file called a project container to facilitate the transfer of the project from one location to another.

According to an aspect of the present invention the project file may be written in an extensible formatting language.
Figure 1 is a block diagram of an electronic document management system according to the invention; and
Figure 2 is a block diagram of project container according to the invention.

While the electronic document management system of the invention may be used for any output device, it will be described, for convenience, in detail for generating printed documents. The invention has been implemented with the Variable data Intelligent PostScript Printware VIPP) product manufactured by Xerox Corporation and will be described with reference to that implementation.

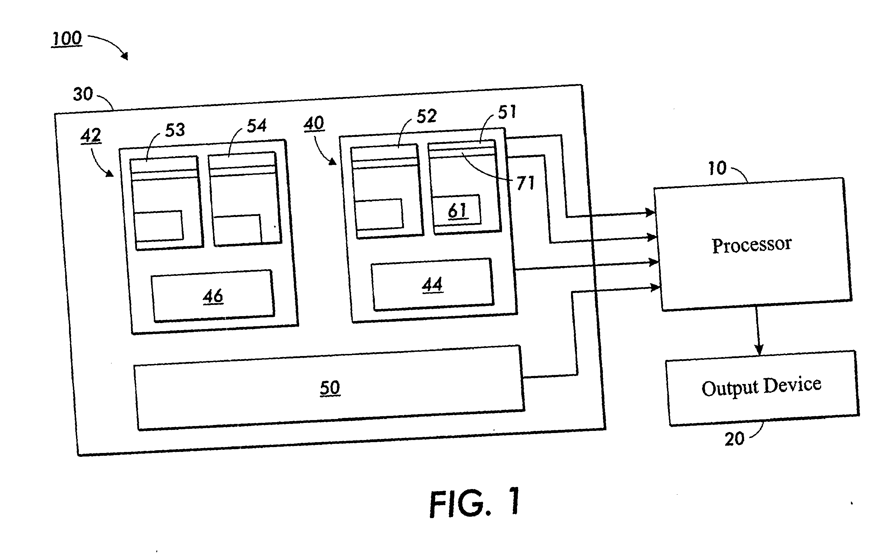

Referring to Figure 1, an electronic document management system 100 includes a processor 10 and memory 30. Stored within memory 30 are the various components needed to complete a print job by output device 20, which may be a printer. Stored within memory 30 are folders 40 and 42. Folder 40 includes projects 51 and 52; folder 42 includes projects 53 and 54. A project is used to describe the activities related to the lifecycle of a job. A job includes all the activities associated with the generation of a data stream for outputting a printed version of an electronic document. Project 51, for example, includes a project file 71 and a plurality of components 61. The components 61 have a project scope, which means they can only be used by project 51. Folder 40 also includes a plurality of components 44, which have folder scope, which means they can be used by either project 51 or project 52. Within memory 30 is also stored a group of components 50 having a global scope, which means they can be used by any of projects 51-54.

The following terms are used in the description of the VIPP implementation of the electronic management system.

Reusable object. An image, text or graphic element (or a combination of these) used more than once in a job or across jobs.

Variable data. An image, text or graphic (or a combination of these) used only once in a job or whose contents may vary during the job.

Submission file. The file that is effectively submitted to the DFE or application for processing. The submission file may or may not contain the variable data. For example, a submission file may just contain commands that reference a data file (see Data File) containing the actual variable data. This functionality allows sharing a single set of variable data between several VIPPProjects. A good example of usage of this feature is sharing the variable data resulting from a single database extraction between several marketing campaigns.

Data file. The file that contains the variable data. Usually, only textual data is contained on a data file. The textual data can then be "mapped" to reusable objects.

Pre-Caching. The functionality that allows converting a reusable object encoded in standard formats (PostScript^{™}, TIFF, JPEG, etc.) to a format optimized for the DFE or application processing. The pre-caching usually happens as a separate step before the submission of jobs using pre-cached reusable objects.

Processing variable data is from the beginning the core functionality of the VIPP language. The model used by VIPP to compose documents is known inside Xerox as Dynamic Document Composition (DDC) and is based on a real time composition of the document at the DFE or application imaging the document. In this model, document components may be separate of the submission file that triggers the beginning of the composition process. Components like pictures and graphics can be stored locally on the disk drives or accessed from networked disk drives. This model fits particularly well the applications targeted by VIPP because it matches the model commonly used for the creation of most documents in production environments where job components may be created by several persons. At the same time, the DDC model improve performances by enabling "RIP once / Use many" for the reusable components of the document.

VIPP organized and stored resources in libraries by type and no easy means was available to manipulate at once all the components of a VIPP job until the electronic document management system of the invention and in particular the project feature (called VIPPProject) was implemented. VIPPProject simplifies handling of the components of a job by logically and physically "grouping" these components as part of a single entity called a VIPPProject (logical) or VIPPProject Container (physical). The components of a job are identified, organized and stored under a single name (the project) and jobs are grouped by family (the folder). An entire project including project components can be packaged in a single file (the container) and transferred between applications, devices or locations.

VIPPProject logical structure. VIPPProjects uses a two level hierarchy. The lowest level is the project and the highest is the folder.

Projects. A project can be described as a collection of components that are used at one or several steps of a job lifecycle. Examples of project components are: pictures in TIFF, EPS or JPEG format; Job Descriptor Tickets (JDT) or Data Base Masters (DBM); Forms in PostScript format; submission files; production data; sample of production data used for the development of the job; pre-processed objects stored in optimized formats for usage of a specific DFE or application (e.g., documents processed by DocuPrint NPS or DocuSP Decomposition Services); an editable version of the job in application specific format (e.g., DesignMerge); and viewable versions of the job in PDF format.

Components can be added to a project as needed. For example a project can be created with only a form and then, when they have been scanned, the pictures can be added. Later on, a sample of the production data can be added. At this stage, a design tool like VIPP Interactive Development Environment (IDE) can be used to setup the job and add JDT or DBM to the project.

Also, components have one of the following scopes: local, folder or global.

Local scope. The component can only be used by the project to which it pertains. Local scope takes precedence over "folder shared" and "global shared" scopes. That is, if a component in the local scope is also available with the same name in the "folder shared" or "global shared" scope, the one with the "local scope" will be used.

Folder shared scope. The component is shared between all the projects in a specific folder. For example, a department logo may be shared across all the projects of the department. In this case, it makes sense to assign a "folder shared" scope to the logo to avoid storing the logo on every project. This not only saves storage space, but also insures consistency across jobs and simplifies maintenance. "Folder shared" scope takes precedence over "global shared".

Global shared scope. The DFE or application shares the component between all projects in all folders accessible. For example, a company logo may be shared across all the projects of the company. In this case, it makes sense to assign a "global shared" scope to the logo to avoid storing the logo on every folder or project. This not only saves storage space, but also in addition insure consistency across jobs and simplifies maintenance.

Folders. A folder can be described as a collection of projects that share some commonality. For example, a Service Bureau working with several customers will create a folder per customer and then store the jobs from each customer as a project on the customer's folder. Such structure will look as follows:
Customer1:
   Project1
   Project2
   Project3
Customer2:
   Project1
   Project2
   Project3

In addition to the VIPPProject having a logical structure, it also has a physical structure. The VIPPProject includes three methods for mapping the logical structure to the physical representation of the project and for storing information about folders, projects and project components.

Components of a project are logically linked by a project name. But in order for VIPP Core, DFEs or applications to handle projects, a physical representation of the project must exist. VIPPProject define three methods to physically represent a project: organizing the project components (files) in specific directories and storing components and project information on a VIPP Project File (VPF); organizing the project components (files) in specific directories; and organizing the project components (files) including the VPF file in a single container. Applications handling VIPP projects may provide utilities to convert a project from one form to another.

VIPPProject provides several commands which organize the project components files in the file system. The command SETPPATH in the "xgfdos.run" (Windows systems) or "xgfunix.run" (Unix systems) files provides the mapping between the logical structure of a project and its physical representation on the file system. The "xgfxxxx.run" files are located in the "c:\xgf\src" ("/usr/xgf/src" for Unix) directory and installed during the installation of the VIPP Core software. The SETPPATH syntax is:

```
              [ (path to project library 1)
              (path to project library 2)
              ...
             ] SETPPPATH
```

For example in a Windows based system:

```
              [(c:\\xgfc\\$$FOLDER.\\$$PROJECT.\\) ] SETPPATH
```

Defines "c:\xgfc" as the base repository for all folders and projects.

Some of the directories paths must contain the key sequences "$$FOLDER." and "$$PROJECT." as place holders for project folder and project names. These keys are replaced by the folder and project name provided by the SETPROJECT VIPP command used at the beginning of a VIPP job before any access to the job components.

The SETPROJECT syntax is:

```
              [ (folder_name) (project_name) ] SETPROJECT
```

where (folder_name) is the replacement value for $$FOLDER. and (project_name) is the replacement value for $$PROJECT. For example, assuming the following SETPPATH in the xgf\src\xgfdos.run file:

```
              [ (c:\\xgfc\\$$FOLDER.\\$$PROJECT.\\) ] SETPPATH
              a submission file beginning with:
              %!
              [(campaign1) (wave1)] SETPROJECT
              (wave1.jdt) STARTLM
              ...
```

will reference the project "wave1" in the folder "campaign1" and will search for resources exclusively in the directory: C:\xgfc\campaign1\wave1

Sending another submission file like:

```
             %!
              [ (campaign2) (wave1) ] SETPROJECT
              (wave1.jdt) STARTLM
              ...
```

will result in accessing the project "wave1" but in the folder "campaign2" and will search for resources exclusively in the directory: C:\xgfc\campaign2\wave1

Shared components. The SETPPATH specifies 3 categories of paths: local for components pertaining exclusively to a specific project; folder for components shared between all the projects pertaining to the same folder and global for components shared between all projects in all folders. There may be several paths in each category but they must be grouped by category and defined in that order (local, folder, global) in the SETPPATH list. There must be at least one path of each category.

### Example:

```
              [ (c:\\xgfc\\$$FOLDER.\\$$PROJECT.\\)
              (d:\\store\\$$FOLDER.\\$$PROJECT.\\)
              (c:\\xgfc\\$$FOLDER.\\shared\\)
              (d:\\store\\$$FOLDER.\\shared\\ ] SETPPATH
```

A folder or project name must appear only once in the file system hierarchy. Also, if present, $$FOLDER and $$PROJECT must appear only once in each path.

Any paths in SETPPATH containing both "$$FOLDER." and "$$PROJECT." are local paths. $$PROJECT must always immediately follow $$FOLDER. A path containing only $$PROJECT is not allowed. No additional path components are allowed after $$PROJECT. Components stored in such paths can be accessed only by the project specified by the folder and project parameters of the SETPROJECT command in the submission file. For example, assuming the following SETPPATH command in the xgf\src\xgfdos.run file:

```
              [ (c:\\xgfC\\$$FOLDER.\\$$PROJECT.\\) ] SETPPATH
```

And the following SETPROJECT command in the submission file:

```
              [ (campaign1) (wave1) ] SETPTROJECT
```

All the components of the project "wave1" in the folder "campaign1" have a local scope and are present only in the following directory: c:\xgfc\campaign1\wave1

Any paths in SETPPATH containing only "$$FOLDER." are folder shared paths. A path ending by $$FOLDER is invalid. Components stored in such paths are shared between all the projects pertaining to the folder specified by the folder parameter of the SETPROJECT command in the submission file. For example, assuming the following SETPPATH command in the xgf\src\xgfdos.run file:

```
              [ (c:\\xgfc\\$$FOLDER.\\$$PROJECT.\\)
              (c:\\xgfc\\$$FOLDER.\\shared\\)
              ] SETPPATH
```

and the following SETPROJECT command in the submission file:

```
              [ (campaign1) (wave1) ] SETPTROJECT
```

The components of the project "wave1" in the folder "campaign1" that have a local scope will be present in the following directory: c:\xgfc\campaign1\wave1 and the components of the project "wave1" in the folder "campaign1" that have a folder scope and are shared between all the projects in the "campaign1" folder will be present in the following directory: c:\xgfc\campaign1\shared

Any paths in SETPPATH that does not contain "$$FOLDER." nor "$$PROJECT." are global shared paths. The VIPP interpreter shares components stored in such paths between all the folders and projects. For example, assuming the following SETPPATH command in the xgf\src\xgfdos.run file:

```
              [ (c:\\xgfc\\$$FOLDER.\\$$PROJECT.\\)
              (c:\\xgfc\\$$FOLDER.\\shared\\)
              (c:\\xgfc\\gshared\\)
             ] SETPPATH
```

And the following SETPROJECT command in the submission file:

```
              [ (campaign1) (wave1) ] SETPTROJECT
```

The components of the project "wave1" in the folder "campaign1" that have a local scope will be present in the following directory: c:\xgfc\campaign1\wave1. The components of the project "wave1" in the folder "campaign1" that have a folder scope and are shared between all the projects in the "campaign1" folder will be present in the following directory: c:\xgfc\campaign1\shared and the components of the project "wave1" in the folder "campaign1" that have a global scope and are shared between all projects in all folders will be present in the following directory: c:\xgfc\gshared

The following default directories are created and defined in the "xgfdos.run" and "xgfunix.run" files at VIPP Core installation:
Windows based systems:

```
              [ (c:\\xgfc\\$$FOLDER.\\$$PROJECT.\\)
              (c:\\xgfc\\$$FOLDER.\\shared\\)
              (c:\\xgfc\\shared\\)
              ] SETPPATH
```

Unix based systems:

```
              [ (/usr/xgfc/$$FOLDER./$$PROJECT./)
              (/usr/xgfc/$$FOLDER./shared/)
              (/usr/xgfc/shared/)
              ] SETPPATH
```

"folder" directories creation:
Windows based systems: c:\xgfc
Unix based systems: /usr/xgfc

The folder directories should be created in this directory and the project directories created on the appropriate folder directory. For example, assuming that a project named "wave1" should be created in the "campaing1" folder, the following directories will have to be created:
Windows based systems:
   c:\xgfc\campaign1 (folder directory)
   c:\xgfc\campaign1\wave1 (project directory)
Unix based systems:
   /usr/xgfc/campaign1 (folder directory)
   /usr/xgfc/campaign1/wave1 (project directory)

And all the components with a local scope for the "wave1" project, should be stored in: Windows based systems:
c:\xgfc\campaign1\wave1 Unix based systems:
/usr/xgfc/campaign1/wave1 "folder shared" directories creation: Windows based systems:
c:\xgfc\folder_name\shared Unix based systems:
/usr/xgfc/folder_name/shared

Where "folder_name" is the name of the folder and "shared" is a directory created in the folder directory that should be used to store the components shared between projects pertaining to the same folder. For example, assuming that the department logo "deplogo.tif" has to be used by the project "wave1" but also by all other projects in the "campaign1" folder, the following directory should be created and the "deplogo.tif" file stored in it: Windows based systems:
c:\xgfc\campaign1\shared Unix based systems:
/usr/xgfc/campaign1/shared "global shared" directories creation: Windows based systems:
c:\xgfc\gshared Unix based systems:
/usr/xgfc/gshared

Where "gshared" is a directory that should be used to store the components shared between all projects in all folders. For example, assuming that the company logo "logo.tif" has to be used by all projects in the "campaign1" folder but also by all other projects in the other entire folders, the "logo.tif" should by stored in:
Windows based systems:
   c:\xgfc\gshared
Unix based systems:
   /usr/xgfc/gshared

VIPP Project File (VPF). Applications and output devices handling VIPPProjects need to know more than the location of the project components on the file system. For example, as VIPP does not enforce any naming convention for the files containing the components, the type of the component (E.I. forms, segments, etc.) must be provided somewhere. The VIPP Project File is used to provide this information. In order to facilitate the processing and portability of the VPF file, the VPF file is written in an extensible language, such as XML language version 1.0. As a general rule, applications modifying information inside VPF files must preserve the remaining of the information present on the file. Exceptions are documented when they exist.

The VPF file contains four types of information stored as XML elements and/or attributes: bibliographic information about the project; VIPP components information; Non VIPP components information; and historical information about the project. The order in which this information is stored on the VPF file is not meaningful and is not enforced by the specifications. For example the copyright statement may be placed before the name of the project or after as far it is in the bibliographic section. And the bibliographic section can be after the historical information section.

Unless when specified, applications reading and writing VPF files are not expected to respect any specific order or even to maintain the original order of the information in a VPF file when they edit it. That is, if the VPF file is encoded using the current rules defined and is a well-formed XML file, the VPF file should be successfully processed by any DFE or application supporting the release of the VPF specification indicated on the VPF file. Also, XML only expresses the logical structure of data and not the formatting of the data. Thus, as described by the XML syntax, formatting characters like carriage control (CR) and tabs can be used for the purpose to format the XML, code but, when used inside element data, they are not indicating any specific formatting of the data. The application presenting the data is free to present the data according with it's own rules. Applications writing VPF files are not expected to maintain the original formatting characters and are free to add their own when they edit a VPF file.

Comments compliant with the XML language are allowed in VPF files. Nevertheless, comments should not be used to indicate a specific file structure neither relied on for any purpose. Also, as it is expected that VPF files be generated and read by multiple applications and as it is often difficult for applications to determinate the correct position of a comment generated by another application when modifying a VPF file, there is no requirement on the VIPPProject specification that comments be maintained during a VPF file modification operation. That is, applications may choose to do not preserve comments on VPF files they edit.

### Example: <!-- Created by XYDesign software v1.3 -->

The VPF file is a component of the project and must be stored on the project directory. To improve cross-platform portability, it is highly recommended to use file names with a maximum of 32 characters and to only use "a" to "z", "0" to "9", "." (dot), "-" (dash) and "-" (underscore) characters. The name of the VPF file must end by a "." (dot) followed by "vpf". As only one VPF file per project must exist, no other file on the project should be end by a "." (dot) followed by "vpf". Example: Goljob.vpf

VPF File Structure. As any XML well-formed document, the VPF file must start with the XML declaration as follow: <?xml version=' 1.0'?>. Then the Document element (or root element) must follow. For VIPPProject, the Document element is named "VPF" and contains an attribute providing the version of the VIPPProject release. Example:

```
             <?xml version='1.0'?>
             <VPF Version='1.0'>
             ...
             </VPF>
```

Indicates that the VPF file is encoded using the VIPPProjects specification version 1.0.

Bibliographic information. Bibliographic information about the project is provided by the elements listed below. Bibliographic elements are purely informational and while it is recommended to use them, they are optional (with the exception of the folder and project name that are mandatory in the VIPP implementation). When they exist, only one instance of each must be present in the VPF file. The way the information is entered in the elements and displayed is not part of the VIPPProject specification and is left at the entire discretion of the application or DFE handling the project. For example, an application may choose to only present the name of the project and not present the author, or to display only the first "n" characters of the copyright statement. Nevertheless, applications modifying bibliographic information must preserve the remaining of the information present on the VPF file.

Information. The INFORMATION element contains elements providing bibliographical information about the project. The INFORMATION element tag is:

```
             <INFORMATION>
             ...
             </INFORMATION>
```

Only one instance of the INFORMATION element is allowed per VPF file and the bibliographical elements, if they exist, must be contained within the INFORMATION element. Example:

```
              <INFORMATION>
              <FOLDER_NAME>projects</FOLDER_NAME>
              <PROJECT_NAME>billb1</PROJECT_NAME>
              </INFORMATION>
```

Copyright. Provides copyright information about the project. The content of the element is free form and can be any text up to 512 characters. The COPYRIGHT element tag is:

```
              <COPYRIGHT>
              ...
              </COPYRIGHT>
```

### Example: <COPYRIGHT>Copyright (c) 2000. All Rights Reserved.</COPYRIGHT>

Folder Name. Provides the file system name for the folder that contains the project described by the VPF file. To improve cross-platform portability, it is highly recommended to use file names with a maximum of 32 characters and to only use "a" to "z", "0" to "9", "." (dot), "-" (dash) and "-" (underscore) characters. The contents of this element indicate the file system repository name (directory) associated with the folder and that contains the project repository (directory). The specific path to the folder directory must not be provided as it is resolved using the information provided by the SETPPATH command as explained in section 4.2.

The FOLDER_NAME element tag is:

```
             <FOLDER_NAME>
             ...
             </FOLDER_NAME>
```

### Example: < FOLDER_NAME>projects</FOLDER_NAME>

Project Name. Provides the file system name for the project described by the VPF file. To improve cross-platform portability, it is highly recommended to use file names with a maximum of 32 characters and to only use "a" to "z", "0" to "9", "." (dot), "-" (dash) and "-" (underscore) characters. The contents of this element indicate the file system repository name (directory) that contains the project components with a local scope. The specific path to the project directory must not be provided as it is resolved using the information provided by the SETPPATH command as explained in section 4.2. The PROJECT_NAME element tag is:

```
              <PROJECT_NAME>
             ...
              </PROJECT_NAME>
```

### Example: <PROJECT_NAME>billb1</PROJECT_NAME>

Project Title. Provides the title of the project described by the VPF file. The content of the element is free form and can be any text up to 512 characters. The PROJECT_TITLE element tag is:

```
              <PROJECT_TITLE>
              ...
              </PROJECT_TITLE>
```

### Example: <PROJECT_TITLE>Billing Application</PROJECT_TITLE>

Project Version. Provides the version of the project described by the VPF file. The content of the element is free form and can be any text up to 512 characters. The PROJECT_VERSION element tag is:

```
              <PROJECT_VERSION>
              ...
              </PROJECT_VERSION>
```

### Example: <PROJECT_VERSION>1.0</PROJECT_VERSION>

Project Description. Provides the description of the project described by the VPF file. The content of the element is free form and can be any text up to 512 characters. The PROJECT_DESCRIPTION element tag is:

```
             <PROJECT_DESCRIPTION>
             ...
             </PROJECT_DESCRIPTION>
```

### Example: <PROJECT_DESCRIPTION> This is an example of a project for a utility billing application.</PROJECT_DESCRIPTION>

Author. Provides the name of the individual or organization that has created the project described by the VPF file. The content of the element is free form and can be any text up to 512 characters. The AUTHOR element tag is:

```
             <AUTHOR>
              ···
             </AUTHOR>
```

### Example: <AUTHOR>Green Team</AUTHOR>

Generator. Provides information about the DFE or application that created the project described by the VPF file. The content of the element is free form and can be any text up to 512 characters. The GENERATOR element tag is:

```
              <GENERATOR>
              ...
              </GENERATOR>
```

### Example: <GENERATOR>VIPP Interactive Development Environment 2.0</GENERATOR>

Creation Date. Provides the creation date of the project described by the VPF file. Due to the multitude of formats available to represent a date and time and the lack of a real standard on this matter, the content of the element is free form and can be any text up to 512 characters. The CREATION_DATE element tag is:

```
              <CREATION_DATE>
              ...
              </CREATION_DATE>
```

### Example: <CREATION_DATE>Mon Sep 04 11:57:17

### 2000</CREATION_DATE>

Keywords. Provides keywords associated with the project described by the VPF file. Keywords must be separated by comas and must not contain spaces. Up to 512 characters is allowed in this element. The KEYWORDS element tag is:

```
              <KEYWORDS>
              ...
              </KEYWORDS>
```

### Example: <KEYWORDS>demo, billing</KEYWORDS>

Project Components Information. In order to be handled correctly by the DFEs or applications, the components (also referred to as resources) that are part of a project needs to be described. For example, what is the name of a resource? What is its scope (local, folder or global shared)? The RESOURCES and RESOURCE elements are used on the VPF file to provide this information.

Resources. The RESOURCES element must list all the resources that are part of the project. The RESOURCES element is always present in the VPF file and must contain at least one RESOURCE tag. Only one RESOURCES element per VPF file is allowed. The RESOURCES element tag is:

```
             <RESOURCES>
             ...
             </RESOURCES>
```

Resource. The RESOURCE element and its attributes describe each individual project component. Only one RESOURCE element per project component is allowed in a VPF file. By default, applications manipulating VIPPProjects must keep all the components described by RESOURCE elements part of the project regardless if the application use them or not. For example, resources in a proprietary format for a specific DFE should not be discarded from a project when another DFE is manipulating the project. Nevertheless, the application or DFE may provide the choice to not extract specific resources from the VIPPProject container (see below). All the RESOURCE elements must be contained within the RESOURCES element. At least one RESOURCE element must be present between the RESOURCES element start and end tags, as there is at least one resource in a valid project. The table 1 bellow describes the attributes and indicates which ones are mandatory and which ones are optional. The RESOURCE element tag is:

```
             <RESOURCE attr1='value1' attr2='value2' ... />
```

Were "attrX" represents one of the attributes listed in table 1 bellow and "valueX" the attribute value. Example:

```
             <RESOURCE Name='billb.lm' Type='sub' Scope='0'
             SubmissionOrder='0'Description='Print file specified
             in VIPP IDE'/>
```

Table 1 sets forth a list of all the resource element attributes used in VIPPPRoject.

**Table 1- Resource Element Attributes**

| Name | Values | | | Presence | Description |
|---|---|---|---|---|---|
| Name | Name of the file that contains the resource as used by the file system. To improve cross-platform portability, create file names with a maximum of 32 characters using only "a" to "z", "0" to "9", "." (dot), "-" (dash) and " _" (underscore) | | | Mandatory | Description of the file that contains the resource. |
| Type | May be one of the following: | | | Mandatory | Provides the type of the resource |
| | sub | Stands for "submission" and is used for files containing "STARTLM" or "STARTDBM" or VIPP native mode files. Used in conjunction with "Submission Order" attribute (see below). | | | |
| | dat | Stands for "data" and is used for files containing variable data and referenced by submission files (type "sub"). | | | |
| | img | Stands for "image" and is used for files suitable for the ICALL VIPP commands. | | | |
| | seg | Stands for "segment" and is used for files suitable for SCALL and FCALL VIPP commands. | | | |
| | jdt | Stands for Job Descriptor Ticket (JDT) and is used for JDT file suitable for STARTLM and SETJDT VIPP commands. | | | |
| | frm | Stands for "form" and is used for files suitable for the SETFORM/SETBFORM VIPP commands. | | | |
| | dbm | Stands for Data Base Master (DBM) and is used for DBM files suitable for the STARTDBM VIPP command. | | | |
| | mis | Stands for "miscellaneous" and is used for files suitable for the RUN or CACHE command. | | | |
| | fnt | Stands for "font" and is used for fonts suitable for the SETENCODING command. | | | |
| | oth | Stands for Other and is used for all resources that are not meant for VIPP Core processing (see Non-VIPP Components below). | | | |
| Scope | 0 | Stands for "Project" and is used for resources that are used only by the project (local scope) | | Mandatory | Defines the scope in which the resource is used. |
| | 1 | Stands for "Folder" and is used for the resources that are shared between all the projects pertaining to the same project folder (folder scope) | | | |
| | 2 | Stands for "Global" and is used for all the resources that are shared between all the projects in the folders. | | | |
| PreCaching | true | Indicates the resource is suitable for pre-caching | | Optional | Allows "flagging" a resource as suitable for pre-processing. For example, a DFE may act on this attribute to pre-process a PostScript form and store it in an optimized format to improve performance. |
| | false | Indicates that the resource is not suitable for pre-caching | | | |
| | Default is false. | | | | |
| Description | Free form. The maximum length for this value is 512 characters. | | | Optional | The content of this attribute is free form and purely informational. |
| Submission Order | 0 | Identifies a submission file containing sample data for design or proof print purpose. The "0" value is not used to establish the submission order and the file is not part of the processing sequence of files with a "1 to 9999". | | Must only be present if the resource type is "sub." | This attribute is used to control the sequence in which multiple submission files are processed. For example, a project may contain a submission file with the first five thousand records of a mailing and second submission file containing the remaining four thousand records of the same mailing. If a finishing device processes the resulting documents in the order in which the submission files are processed. |
| | 1 to 9999 | | | | |
| | | Identifies production submission files. The number indicates the order of submission in case several of them exist in a project. The file with the lowest number will be submitted for processing first. Note that the values do not need to be consecutive or start at 1. For example, File 1 may have a value of "2". File 2 may have a value of "9" and File 3 a value of "20". In this case the processing sequence will be: | | | |
| | | File 1 | (value = 2) | | |
| | | File 2 | (value = 9) | | |
| | | File 3 | (value = 20) | | |
| | The same value must not be used twice. For example, if File 1 has a value of "2", no other submission file can have a value of 2. | | | | |
| | If there is only one submission file on the project, the actual value is ignored and the file submitted for processing. | | | | |
| LowRes | 0 | Indicates that the resource is not suitable for generation of a low resolution version. | | Optional | Allows "flaggin" a resource as suitable for generation of a low-resolution version. For example, a design application may act on this attribute to process a PostScript form and store it in an optimized format to improve performance during the design phase. The resulting resource will then be listed on the VPF file using the RESOURCE element with the attribute TYPE set to "oth". |
| | 1 | Indicates that the resource is suitable for a low resolution version. | | | |
| | Default is 0. | | | | |
| Mime | The mime type of the resource. | | | Optional | Provides the mime type of the resource (see Mime Attribute below). |

Adding attributes to the RESOURCE element. In addition of the attributes specified in table 1, proprietary attributes can be added by applications for their specific needs. Proprietary attributes must conform to the XML specifications for attributes. In order to avoid attribute names conflicts, vendors can register a unique identifier string and use it as root for the name of their attributes. The unique identifier must be composed of a maximum of 32 characters and use only "a" to "z", "A" to "Z", "0" to "9", "-" (dash) and "-" (underscore) characters. The unique identifier immediately followed by a "." (dot) must always start the name of the attribute. For example, the unique identifier for VIPP is "VIPP". Thus, a new proprietary attribute providing the size of the component will be called: VIPP. Size.

Vendors can request registration for their unique identifier by sending e-mail with the request to VIPPRegister@usa.xerox.com. As XML specify that only one instance of each attribute can be present for an element, it is the responsibility of the application creating the new attribute to ensure that an attribute with the same name does not already exist on the element.

Mime Attribute. The optional Mime attribute may be used to provide the mime type of the file and "link" the resource to a specific application using the OS functionality. For example, a file with a mime type of "pdf" will be linked with the Acrobat Reader or whatever application the user has defined on Windows. The Mime attribute could be used for any type of resource including VIPP resources. As an alternative to the usage of the Mime attribute, the extension of the file name in conjunction with the OS functionality could be used to link the file to a specific application. The actions associated with the presence or absence of the Mime attribute or a file extension are not part of the VIPPProject specifications. But compliant VIPPProject handlers must be able to preserve the Mime attribute and its value even if they do not use it.

Non-VIPP Components. VIPPProject also accommodates components that are not meant for direct VIPP processing (not suitable to be processed by VIPP commands). For example, it may be practical to include on the project the editable version of a job design in the proprietary format used by the application emitting the VIPP code. If the project is then shipped for production to another location and last minute changes needs to be done, they can be handled locally. Another example is pre-processed objects in optimized formats for usage by a VIPP job on a specific DFE. The VIPP PRECACHE command or the "PreCaching " attribute on the RESOURCE element can be used to submit or "flag" job components for pre-processing. The DFE can then process the components, create an optimized version and store them as part of the project. All Non-VIPP project components must be described on the VPF file using the RESOURCE element with the "Type" attribute set to "oth". The method to link instances of the same resource in different formats is not part of the specification. Suggested methods are to use proprietary attributes on the RESOURCE element or naming conventions for the files containing the non-VTPP resource.

For example, VIPP IDE 2001 allows creating a low-resolution version of complex jobs components and use it during the design phase. VIPP IDE 2001 relies on a naming convention: the low-resolution version of the component must have the same name as the source followed directly by "_v". When creating the low resolution version of the component, VIPP IDE 2001 create the following entries on the VPF file:

```
              <RESOURCES>
              <RESOURCE Name='xlogo.tif' Type='img' Scope='0'
              LowRes='1'/>
              <RESOURCE Name='xlogo.tif_v' Type='oth' Scope='0'
              Description='Accelerated version of
              'xlogo.tif''/>
              ...
              </RESOURCES>
```

Private. The Private element provides a mechanism to store information not covered by the other elements of the VPF file. The PRIVATE element is optional but can be present several times on a VPF file. Any element not specified in this document is considered proprietary and must be contained in the PRIVATE element. The syntax and structure of proprietary elements must conform to XML 1.0 language specification. If a proprietary element is used, the creator of the element is responsible for specifying its syntax, meaning and expected associated actions. Applications handling VIPPProjects must be able to preserve the PRIVATE element tags and contents but they are free to do not act on them and ignore them. The PRIVATE element tag syntax is:

```
              <PRIVATE Identifier='string'>
              Proprietary elements
              </PRIVATE>
```

Where "Identifier='string"' provides information about who has created the private element. See "Adding attributes to the RESOURCE element" for information about creating and registering a unique identifier.

In the following example, a vendor named Acme Corp. want to define an element DISPOSITION to indicate if a project should be archived for later usage or deleted after printing. The asset management system will then use the DISPOSITION element to decide what to do with the project. The registered unique identifier for Acme Corporation is "ACMECORP". The PRIVATE element will look as follow:

```
              <PRIVATE Identifier='ACMECORP'>
             <DISPOSITION Archive='true' IndexKey='Wawe1'/>
             </PRIVATE>
```

Historical Information. Historical information about the project is provided by the modification section of the VPF file. As a minimum, adding, editing or deleting resources and bibliographic information must be recorded together with the date they happened and the identifier of the person or application that performed the action. The content of the modification section is purely informational and due to the nature of XML, integrity of the historical information cannot be guarantied and should not be relied on for applications requiring an accurate logging. Only one modification section must be present in the VPF file. The way the information is entered in the elements and displayed is not part of the VIPPProject specification and is left at the entire discretion of the application or DFE handling the project.

Modifications. The MODIFICATIONS element must list all the actions performed on a project that result in a change on the contents of the project or its bibliographic information. For example, adding, modifying or deleting a resource or changing the contents of the PROJECT_VERSION element are typical actions that need to be recorded. The MODIFICATIONS element tag is:

```
              <MODIFICATIONS>
              ...
              </MODIFICATIONS>
```

Modification. The MODIFICATION element list all the changes performed to the project for a specific "session". For the purpose of these specification, a session is defined as a period of time delimited by a sequence of "start of session" and "end of session" events. That it, the specifics of the start and end of session events may vary per type of application. For example, applications like VIPP IDE 2001 starts a session when the project is loaded as a result of using "Open" in the "File" menu and terminate the session when the project is saved without discarding the modifications. All the changes between these two events will be listed under a single MODIFICATION element. But a DFE pre-processing resources will use the job start and end events as delimiters for a session. The MODIFICATION elements must be contained within the MODIFICATIONS element. Because, there is no format enforced by the specification for date and time, the MODIFICATION element must be ordered sequentially by time. The oldest listed first. Applications editing the VPF file must add their MODIFICATION element after the last one present on the VPF file. Applications presenting historical information should rely on this rule to display the information chronologically. The MODIFICATION element tag is:

```
             <MODIFICATION>
             ...
             </MODIFICATION>
```

### Example:

```
             <MODIFICATIONS>
             <MODIFICATION>
             ...
             </MODIFICATION>
              <MODIFICATION>
              ...
              </MODIFICATION>
              </MODIFICATIONS>
```

Date. The DATE element is identical in syntax and meaning to the DATE element in the bibliographical section and provides a time stamp of when the modification was effective (end of session event). The DATE element must be present inside a MODIFICATION element. Only one instance of the DATE element is allowed per MODIFICATION element. Example:

```
              <MODIFICATIONS>
              <MODIFICATION>
              <DATE>2000-11-20, 10:49:00</DATE>
              ...
              </MODIFICATION>
              </MODIFICATIONS>
```

User. The USER element provides the identifier of the person or application that performs the change. For example, most of the Microsoft™ Windows applications use the name of the user logged in as identifier. The content of this element is free form. The USER element must be present inside a MODIFICATION element. Only one instance of the USER element is allowed per MODIFICATION element. The USER element tag is:

```
             <USER>
             ...
             </USER>
```

### Example:

```
             <MODIFICATIONS>
             <MODIFICATION>
             <DATE>2000-11-20, 10:49:00</DATE>
             <USER>Csans</USER>
             ...
             </MODIFICATION>
             </MODIFICATIONS>
```

Actions. The ACTIONS element provides a list of the changes performed to a project during a specific session. The ACTIONS element must be present inside a MODIFICATION element. Only one instance of the ACTIONS element is allowed per MODIFICATION element. The ACTIONS element tag is:

```
             <ACTIONS>
             ...
             </ACTIONS>
```

Action. The ACTION element describes one specific change performed on the project. At least one instance of the ACTION element must be present inside the ACTIONS element. The content of the ACTION element is free form and not specified. The ACTION element tag is:

```
             <ACTION>
             ...
             </ACTION>
```

### Example:

```
             <MODIFICATIONS>
             <MODIFICATION>
             <DATE>2000-11-20, 10:49:00</DATE>
             <USER>Csans</USER>
             <ACTIONS>
             <ACTION>Modify 'frm' file
             'bvr.frm'</ACTION>
             <ACTION>Changes attribute 'Project
             Title'</ACTION>
             </ACTIONS>
             </MODIFICATION>
             </MODIFICATIONS>
```

Organizing the project components without a VPF file. This method is mainly targeted for the creation of projects manually without the help of an application. For example, a VIPP 2.1 job using the following components stored in a Windows based system loaded with VIPP 2001 Core and the default configuration:
C:\xgfc\jdtlib\wave1.jdt
C:\xgfc\formlib\wave1.dbm
C:\xgfc\formlib\wave1f1.frm
C:\xgfc\imglib\deplogo.tif

Can be converted to a project named "wave1", part of the folder "campaign1" easily and quickly by creating the following directories:
C:\xgfc\campaign1 (folder)
C:\xgfc\campaign1\wave1 (project)

And moving all the VIPP 2.1 job components to:
C:\xgfc\campaign1\wave1

The submission file will then have to be modified by adding at the very beginning:

```
             [ (campaign1) (wave1) ] SETPROJECT
```

Nevertheless, it is not expected that projects created by this method be suitable for usage by applications as explicit information about the components of the project normally provided by the VPF file is not available. That is, there is no requirement in the VIPPProject specification for applications to be able to handle projects that does not contain a VPF file. Application developers may choose to handle such projects or not. For example, VIPP IDE is able to import such projects and create the missing VPF file.

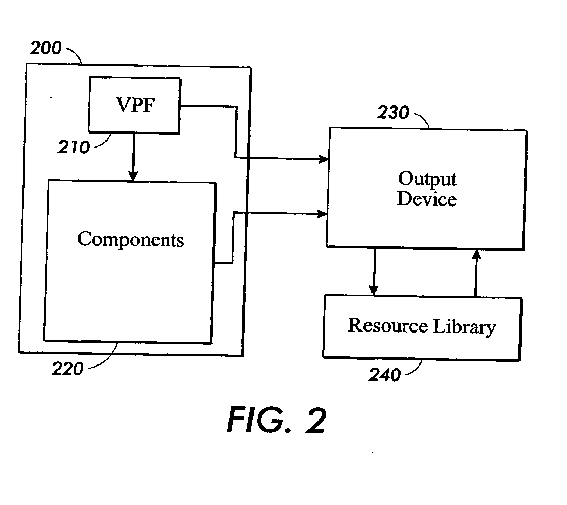

VIPPProject Containers. The prior sections describe how to logically link the components of a project and how to organize the separate components of the project in a file system. Projects can be made to be easily transportable from one system to another or from one location to location. This is accomplished by bundling all of the components of a project as well as the VPF file into a single physical file called the VIPPProject Container 200 (see Figure 2).

VIPPProject Container (VPC) File. The VPC file 200 contains all the components 220 of a VIPPProject listed by the RESOURCES element of the project VPF file 210 and the VPF file 210 itself The format used to encode the VPF file is Zip/UnZip, but any other convenient utility may also be used. The choice of using the Zip/UnZip format was made based on the efficiency of the zlib format. Libraries to develop applications processing this format are available for numerous platforms (including Microsoft Windows, Apple Mac OS and several flavors of Unix) and are generally available for free inclusion on commercial packages.

Creating a VPC file. A VPC file must contain all the components of the project listed by the RESOURCES element in the project VPF file. The VPF file must also be included in the VPC file. The name of the components must not be changed, as it must stay consistent with the value of the "Name" attribute of the component RESOURCE element. The file format used for the VPC file is compliant with the version 0.15 of the Zip and UnZip specifications. Libraries for application development are provided as part of the general-purpose data compression library "zlib". Information about "mini zip" and "zlib" and the libraries are available at:
Zlib URL: http://www.cdrom.com/pub/infozip/zlib/
Zip/UnZip URL: http://www.winimage.com/zLibDll/unzip.html

Expanding a VPC file. The VPC file 200 is provided to output device 230, it begins to expand the components 220 in accordance with the structure described in the VPF file 210. When expanding a VPC file, the project components must be placed on the correct file system location 240 (directory) based on their scope. As described above, the SETPPATH command located in the "xgfdos.run" (MS Windows) or "xgfunix.run (Unix systems) provides the physical location on a specific system of the project components. Thus, the sequence of operations should be:
1. Extract the VPF file (only file on the VPC file that ends by "."(dot) followed by "vpf".
2. Extract the FOLDER_NAME and PROJECT_NAME values from the VPF file.
3. Extract the SETPPATH command value(s) from the "xgfdos.run" (MS Windows) or "xgfunix.run (Unix systems) file.
4. Use the folder name and project name extracted in step 2 and the SETPPATH command value(s) extracted in step 3 to obtain the path to the local, folder shared and global shared directories.
5. For each RESOURCE element, extract the attributes and use the value of "Scope" and "Name" to store the resource on the correct directory.
6. Save the VPF file on the project directory.

Creating/Expanding VPC files with PKZip® and WinZip®. As VPC files are encoded using the same format than WinZip and PKZip 2.04g, VPC files can be created and expanded using both of these utilities. Nevertheless, while expanding containers with PKZip or WinZip, special care should be used determining where to expand each component on the file system. Expanding a component on the wrong directory will generate unpredictable results when processing the project.

Example 1 shows a graphical representation of the logical structure of a VPF file including the elements described above. Example 2 shows an example of the VPF file of Example 1 coded in VIPP syntax.

### Example 1: Graphical representation of a VPF file logical structure.

```
 D:\download\goljobv.xml 11/21/00 17:37:55
 XML Version 1.0
 VPF Version 0.1
              INFORMATION
                     COPYRIGHT Copyright (c) 2000. All Rights Reserved.
                     FOLDER_NAME Projects
                     PROJECT_NAME goljobv
                     PROJECT_VERSION 1.0
                     PROJECT_TITLE Golden Job
                     PROJECT_DESCRIPTIONVIPPProject example
                     AUTHOR Carlo Sans
                     KEYWORDS example,goljobv,Carlo,Sans
                     GENERATOR VIPP Project Generator 0.1
                     CREATION_DATE Mon Nov 20 2000, 10:43:43
              MODIFICATIONS
                     MODIFICATION
                            DATE 2000-11-20, 10:49:00
                            USER CSans
                            ACTIONS
                                           ACTION Modify ' frm' file
                                           ' bvr.frm'
                     MODIFICATION
                            DATE 2000-11-20, 10:51:58
                            USER CSans
                            ACTIONS
                                           ACTION Changed attribute ' Project
                                           Title'
                     MODIFICATION
                            DATE 2000-11-20, 10:53:00
                            USER CSans
                            ACTIONS
                                           ACTION Changed attribute ' Project
                                           Title'
                     MODIFICATION
                            DATE 2000-11-20, 11:03:11
                            USER CSans
                            ACTIONS
                                           ACTION Accelerate ' img' file
                                           ' xlogo.tif'
                                           ACTION Accelerate ' img' file
                                           ' xlogo.tif'
             RESOURCES
                     RESOURCE
                            Name goljobv
                            Type sub
                            Scope 0
                            SubmissionOrder 0
                            Description Print file specified in VIPP IDE
                    RESOURCE
                            Name samfont.ps
                            Type mis
                            Scope 0
                            Description Sample fonts code
                     RESOURCE
                            Name xgf3.nm
                            Type mis
                            Scope 0
                            Description Native Mode sample code
                     RESOURCE
                            Name billb.lm
                            Type mis
                            Scope 0
                            Description Billing example data
                     RESOURCE
                            Name dcxlogo.seg
                            Type seg
                            Scope 1
                            Description Segment example using a
                            "e;Folder"e; scope
                     RESOURCE
                            Name lis1.lm
                            Type mis
                            Scope 0
                            Description Listing example in Line Mode
                     RESOURCE
                            Name bill.jdt
                            Type jdt
                            Scope 0
                            Description Billing JDT example
                    RESOURCE
```

### Example 2: VPF File Encoding

```
 D:\download\goljobv.xml 11/21/00 12:40:24
 <?xml version="1.0"?>
 <VPF Version="0.1">
       <INFORMATION>
              <COPYRIGHT>Copyright (c) 2000. All Rights Reserved.</COPYRIGHT>
              <FOLDER_NAME>Projects</FOLDER_NAME>
              <PROJECT_NAME>goljobv</PROJECT_NAME>
              <PROJECT_VERSION>1.0</PROJECT_VERSION>
              <PROJECT_TITLE>Golden Job</PROJECT_TITLE>
              <PROJECT_DESCRIPTION>VIPPProject
              example</PROJECT_DESCRIPTION>
              <AUTHOR>Carlo Sans</AUTHOR>
              <KEYWORDS>example,goljobv, Carlo, Sans</KEYWORDS>
              <GENERATOR>VIPP Project Generator 0.1</GENERATOR>
              <CREATION_DATE>Mon Nov 20 2000, 10:43:43</CREATION_DATE>
      </INFORMATION>
      <MODIFICATIONS>
              <MODIFICATION>
                     <DATE>2000-11-20, 10:49:00</DATE>
                     <USER>CSans</USER>
                     <ACTIONS>
                            <ACTION>Modify 'frm' file
                     'bvr.frm'</ACTION>
                     </ACTIONS>
              </MODIFICATION>
              <MODIFICATION>
                     <DATE>2000-11-20, 10:51:58</DATE>
                     <USER>CSans</USER>
                     <ACTIONS>
                            <ACTION>Changed attribute 'Project
                     Title'</ACTION>
                     </ACTIONS>
             </MODIFICATION>
             <MODIFICATION>
                     <DATE>2000-11-20, 10:53:00</DATE>
                     <USER>CSans</USER>
                     <ACTIONS>
                            <ACTION>Changed attribute 'Project
                     Title'</ACTION>
                     </ACTIONS>
             </MODIFICATION>
             <MODIFICATION>
                     <DATE>2000-11-20, 11:03:11 </DATE>
                    <USER>CSans</USER>
                    <ACTIONS>
                            <ACTION>Accelerate 'img' file
                    'xlogo.tif'</ACTION>
                            <ACTION>Accelerate 'img' file
                    'xlogo.tif'</ACTION>
                     </ACTIONS>
              </MODIFICATION>
       </MODIFICATIONS>
       <RESOURCES>
              <RESOURCE Name="goljobv" Type="sub" Scope="0"
              SubmissionOrder="0" Description="Print file specified in VIPP IDE"/>
              <RESOURCE Name="samfont.ps" Type="mis" Scope="0"
              Description="Sample fonts code"/>
              <RESOURCE Name="xgf3.nm" Type="mis" Scope="0"
              Description="Native Mode sample code"/>
              <RESOURCE Name="billb.lm" Type="mis" Scope="0" Description="Billing
              example data"/>
              <RESOURCE Name="dcxlogo.seg" Type="seg" Scope="1"
              Description="Segment example using a "e;Folder"e; scope"/>
              <RESOURCE Name="lis1.lm" Type="mis" Scope="0" Description="Listing
              example in Line Mode"/>
              <RESOURCE Name="bill.jdt" Type="jdt" Scope="0" Description="Billing
              JDT example"/>
              <RESOURCE Name="al.jdt" Type="jdt" Scope="0" Description="JDT
              example"/>
              <RESOURCE Name="bvr.frm" Type="frm" Scope="2" Description="Billing
              applications form in Native Mode. Shared between all the folders. Global
              scope. "/>
              <RESOURCE Name="letter.dbm" Type="dbm" Scope="0"/>
              <RESOURCE Name="samgep.ps" Type="mis" Scope="0"/>
              <RESOURCE Name="rxlog2.frm" Type="frm" Scope="0"/>
              <RESOURCE Name="xgflogo.seg" Type="seg" Scope="0"/>
              <RESOURCE Name="bill.frm" Type="frm" Scope="0"/>
              <RESOURCE Name="p0.jdt" Type="jdt" Scope="0"/>
              <RESOURCE Name="xdlogo.tif" Type="img" Scope="0"/>
              <RESOURCE Name="nullfl" Type="mis" Scope="0"/>
              <RESOURCE Name="truk.nm" Type="mis" Scope="0"/>
              <RESOURCE Name="xlogo.tif" Type="img" Scope="0" LowRes=" 1"/>
              <RESOURCE Name="rxlog3.frm" Type="frm" Scope="0"/>
              <RESOURCE Name="autogrid.jdt" Type="jdt" Scope="0"/>
              <RESOURCE Name="gjobcv.nm" Type="mis" Scope="0"/>
              <RESOURCE Name="imgdemo.nm" Type="mis" Scope="0"/>
              <RESOURCE Name="rpe2.lm" Type="mis" Scope="0"/>
              <RESOURCE Name="xgfts3.frm" Type="frm" Scope="0"/>
             <RESOURCE Name="signa.tif" Type="img" Scope="0"/>
             <RESOURCE Name="imgdemo.frm" Type="frm" Scope="0"/>
             <RESOURCE Name="r2.jdt" Type="jdt" Scope="0"/>
             <RESOURCE Name="rxlogo.frm" Type="frm" Scope="0"/>
             <RESOURCE Name="truk.tif" Type="img" Scope="0"/>
             <RESOURCE Name="bvr1.tif" Type="img" Scope="0"/>
             <RESOURCE Name="fontlist" Type="mis" Scope="0"/>
             <RESOURCE Name="rpe5.lm" Type="mis" Scope="0"/>
             <RESOURCE Name="samddgs.lm" Type="mis" Scope="0"/>
             <RESOURCE Name="bvr2.tif" Type="img" Scope="0"/>
             <RESOURCE Name="sambat.ps" Type="mis" Scope="0"/>
             <RESOURCE Name="r5.jdt" Type="jdt" Scope="0"/>
             <RESOURCE Name="bvr3.tif" Type="img" Scope="0"/>
             <RESOURCE Name="rxlog2b.frm" Type="frm" Scope="0"/>
             <RESOURCE Name="letter.dbf" Type="mis" Scope="0"/>
             <RESOURCE Name="copy.frm" Type="frm" Scope="0"/>
             <RESOURCE Name="rawdata.frm" Type="frm" Scope="0"/>
             <RESOURCE Name="xgf2.ps" Type="eps" Scope="0"/>
             <RESOURCE Name="xlogo.tif_v" Type="oth" Scope="0"
             Description="Accelerated version of 'xlogo.tif'"/>
      </RESOURCES>
      </VPF>
```

## Claims

1. An electronic document management system, comprising:
a memory (30) storing:
a project (51) comprising at least one job associated with an electronic document, a project file (71) associated with the job and a plurality of components (61) having a local scope, wherein a component (61) having a local scope may be used by any job in the project (51);
wherein a job comprises job components associated with generation of a data stream for use by an output device (20) for outputting an output version of the electronic document;
wherein the project file (71) comprises a list of all components associated with the job and for each such component, the component's attribute information and location information; and
a processor (10), responsive to the project file, for enabling generation of the data stream.

2. The electronic document management system according to claim 1, said memory (30) further storing:
a plurality of predetermined locations within the memory (30) for storage of components according to the particular type of component, wherein each of the components associated with the job is stored in the predetermined memory location according to its type; and
said processor (10), responsive to the job, is for mapping the location of the components in the job to the output device (20).

3. The system according to claim 1 or 2, further comprising at least one folder (40) having at least one component (44) having a folder scope, wherein a component having a folder scope may be used by any job in the folder (40) and wherein the project (51) is logically contained within the folder (40).

4. The system of claim 3, further comprising at least one component (50) having a global scope, wherein a component (50) having a global scope may be used by any job in the system.

5. The system of claim 1, wherein the component information stored in the project file (71) includes name, type, scope and description.

6. The system of claim 1 or 2, wherein one component comprises historical information pertaining to the project (51).

7. The system of claim 6, wherein the historical information includes all modification information to the project (51) since project creation.

8. The system of claim 1 or 2, wherein the components include at least one of production data, pre-processed objects in optimized formats for the output device (20), an editable version of the job in an application specific format, a viewable version of the job in final format, JDTs, DBMs, forms, segments, pictures, fonts and variable data associated with the electronic document.

9. The system of claim 1 or 2, wherein the output device (20) comprises a printer and wherein one component listed in the project file (71) comprises a data stream for the printer and one component in the project file (71) comprises an internal formatting description of the electronic document.

10. A project container for enabling generation of an output version of an electronic document, comprising:
a project (51) comprising at least one job associated with the electronic document;
wherein a job comprises job components associated with generation of an output data stream for use by an output device (20) for outputting the output version of the electronic document;
a project file (71) associated with the job, wherein the project file (71) includes a list of all components associated with the job, for each such component, the component's attribute information and change information, and information for use by an extraction utility for ordering the components and for enabling the output device (20) to produce the output data stream of the electronic document; and
a copy of each of the components listed in the project file (71).

## Patentansprüche

1. Elektronisches Dokumentverwaltungssystem, das umfasst:
einen Speicher (30) zum Speichern eines Projekts (51), das wenigstens einen mit einem elektronischen Dokument assoziierten Auftrag, eine mit dem Auftrag assoziierte Projektdatei (71) und eine Vielzahl von Komponenten (61) mit einem lokalen Umfang umfasst, wobei eine Komponente (61) mit einem lokalen Umfang durch einen beliebigen Auftrag in dem Projekt (51) verwendet werden kann,
wobei ein Auftrag Auftragskomponenten umfasst, die mit der Erzeugung eines Datenstroms für die Verwendung durch ein Ausgabegerät (20) zum Ausgeben einer Ausgabeversion des elektronischen Dokuments assoziiert sind,
wobei die Projektdatei (71) eine Liste aller mit dem Auftrag assoziierter Komponenten umfasst und für jede derartige Komponente Attributsinformationen und Positionsinformationen der Komponente umfasst, und
einen Prozessor (10), der in Reaktion auf die Projektdatei die Erzeugung des Datenstroms ermöglicht.

2. Elektronisches Dokumentverwaltungssystem nach Anspruch 1, wobei der Speicher (30) weiterhin speichert:
eine Vielzahl von vorbestimmten Positionen in dem Speicher (30) für das Speichern von Komponenten in Übereinstimmung mit dem bestimmten Komponententyp, wobei jede der mit dem Auftrag assoziierten Komponenten an der vorbestimmten Speicherposition in Übereinstimung mit ihren Typ gespeichert wird, und
wobei der Prozessor (10) in Reaktion auf den Auftrag die Position der Komponenten in dem Auftrag auf das Ausgabegerät (20) abbildet.

3. System nach Anspruch 1 oder 2, das weiterhin wenigstens einen Ordner (40) umfasst, der wenigstens eine Komponente (44) mit einem Ordnerumfang aufweist, wobei eine Komponente mit einem Ordnerumfang durch einen beliebigen Auftrag in dem Ordner (40) verwendet werden kann und wobei das Projekt (51) logisch in dem Ordner (40) enthalten ist.

4. System nach Anspruch 3, das weiterhin wenigstens eine Komponente (50) mit einem globalen Umfang umfasst, wobei eine Komponente (50) mit einem globalen Umfang durch einen beliebigen Auftrag in dem System verwendet werden kann.

5. System nach Anspruch 1, wobei die in der Projektdatei (71) gespeicherten Komponenteninformationen einen Namen, einen Typ, einen Umfang und eine Beschreibung enthalten.

6. System nach Anspruch 1 oder 2, wobei eine Komponente historische Informationen zu dem Projekt (51) umfasst.

7. System nach Anspruch 6, wobei die historischen Informationen alle Modifikationsinformationen zu dem Projekt (51) seit der Erstellung des Projekts enthalten.

8. System nach Anspruch 1 oder 2, wobei die Komponenten wenigstens eines aus: Produktionsdaten, vorverarbeitete Objekte in optimierten Formaten für das Ausgabegerät (20), eine bearbeitbare Version des Auftrags in einem anwendungsspezifischen Format, eine betrachtbare Version des Auftrags in einem endgültigen Format, JDTs, DBMs, Formen, Segmente, Bilder, Schriftarten und variable Daten, die mit dem elektronischen Dokument assoziiert sind, enthalten.

9. System nach Anspruch 1 oder 2, wobei das Ausgabegerät (20) einen Drucker umfasst, wobei eine in der Projektdatei (71) gelistete Komponente einen Datenstrom für den Drucker umfasst und wobei eine Komponente in der Projektdatei (71) eine interne Formatierungsbeschreibung des elektronischen Dokuments umfasst.

10. Projektcontainer zum Ermöglichen der Erzeugung einer Ausgabeversion eines elektronischen Dokuments, der umfasst:
ein Projekt (51), das wenigstens einen mit dem elektronischen Dokument assoziierten Auftrag umfasst,
wobei ein Auftrag Auftragskomponenten, die mit der Erzeugung eines Ausgabedatenstroms für die Verwendung durch ein Ausgabegerät (20) zum Ausgeben der Ausgabeversion des elektronischen Dokuments assoziiert sind, umfasst,
eine Projektdatei (71), die mit dem Auftrag assoziiert ist, wobei die Projektdatei (71) eine Liste aller mit dem Auftrag assoziierte Komponenten umfasst, für jede derartige Komponente Attributsinformationen und Änderungsinformationen der Komponente sowie Informationen umfasst für die Verwendung durch ein Extraktions-Programm zum Ordnen der Komponenten und zum Aktivieren des Ausgabegeräts (20), um den Ausgabedatenstrom des elektronischen Dokuments zu erzeugen, und
eine Kopie jeder der in der Projektdatei (71) gelisteten Komponenten.

## Revendications

1. Système de gestion de document électronique, comprenant :
une mémoire (30) stockant :
un projet (51) comprenant au moins une tâche associée à un document électronique, un fichier de projet (71) associé à la tâche et une pluralité de composants (61) ayant une portée locale, où un composant (61) ayant une portée locale peut être utilisé par une tâche quelconque dans le projet (51) ;
dans lequel une tâche comprend des composants de tâche associés à la génération d'un flux de données destiné à être utilisé par un dispositif de sortie (20) pour délivrer en sortie une version de sortie du document électronique ;
dans lequel le fichier de projet (71) comprend une liste de tous les composants associés à la tâche et pour chacun de ces composants, les informations d'attribut de composant et les informations d'emplacement ; et
un processeur (10), en réponse au fichier de projet, permettant la génération du flux de données.

2. Système de gestion de document électronique selon la revendication 1, ladite mémoire (30) stockant en outre :
une pluralité d'emplacements prédéterminés à l'intérieur de la mémoire (30) pour le stockage de composants selon le type particulier de composant, où chacun des composants associés à la tâche est stocké dans l'emplacement de mémoire prédéterminé selon son type ; et
ledit processeur (10), en réponse à la tâche, est destiné à établir une correspondance entre l'emplacement des composants dans la tâche et le dispositif de sortie (20).

3. Système selon la revendication 1 ou 2, comprenant en outre au moins un dossier (40) ayant au moins un composant (44) ayant une portée de dossier, où un composant ayant une portée de dossier peut être utilisé par une tâche quelconque dans le dossier (40) et où le projet (51) est contenu logiquement à l'intérieur du dossier (40).

4. Système de la revendication 3, comprenant en outre au moins un composant (50) ayant une portée globale, où un composant (50) ayant une portée globale peut être utilisé par une tâche quelconque dans le système.

5. Système de la revendication 1, dans lequel les informations de composant stockées dans le fichier de projet (71) comportent le nom, le type, la portée et la description.

6. Système de la revendication 1 ou 2, dans lequel un composant comprend des informations d'historique concernant le projet (51).

7. Système de la revendication 6, dans lequel les informations d'historique comportent toutes les informations de modification apportées au projet (51) depuis la création du projet.

8. Système de la revendication 1 ou 2, dans lequel les composants comportent au moins un élément parmi des données de production, des objets prétraités en formats optimisés pour le dispositif de sortie (20), une version pouvant être modifiée de la tâche en format spécifique à l'application, une version pouvant être visualisée de la tâche en format final, des JDTs, des DBMs, des formes, des segments, des images, des polices de caractères et des données variables associées au document électronique.

9. Système selon la revendication 1 ou 2, dans lequel le dispositif de sortie (20) comprend une imprimante et où un composant listé dans le fichier de projet (71) comprend un flux de données pour l'imprimante et un composant dans le fichier de projet (71) comprend une description de mise en forme intérieure du document électronique.

10. Conteneur de projet permettant la génération d'une version de sortie d'un document électronique, comprenant :
un projet (51) comprenant au moins une tâche associée au document électronique ;
dans lequel une tâche comprend des composants de tâche associés à la génération d'un flux de données de sortie destiné à être utilisé par un dispositif de sortie (20) afin de délivrer en sortie la version de sortie du document électronique ;
un fichier de projet (71) associé à la tâche, où le fichier de projet (71) comporte une liste de tous les composants associés à la tâche, pour chacun de ces composants, les informations d'attribut de composant et les informations de modification, et des informations destinées à être utilisées par un utilitaire d'extraction pour mettre en ordre les composants et pour permettre au dispositif de sortie (20) de produire le flux de données de sortie du document électronique ; et
une copie de chacun des composants listés dans le fichier de projet (71).
